# EUROPEAN PATENT APPLICATION

(11) **EP 4 576 642 A1**
(43) Date of publication of application: **25.06.2025**
(21) Application number: 23218047.1
(22) Date of filing: 19.12.2023
(51) Int. Cl.: H04L 7/10, H04L 7/04

(54) **BURST-MODE OPTICAL RECEIVING IN A PASSIVE OPTICAL NETWORK**

(71) Applicant: Nokia Solutions and Networks Oy, 02610 Espoo (FI)
(72) Inventor: VERPLAETSE, Michiel, 9810 Nazareth (BE); VAN ROMPAEY, Robbe, 2800 Mechelen (BE)
(74) Representative: IP HILLS NV

(57) **Abstract**

An optical receiver, configured to receive optical burst signals in a passive optical network, PON; wherein the optical receiver comprises a clock-and-data-recovery, CDR, circuitry configured to synchronise a reference clock signal with a received optical burst signal starting from a configurable initial clock phase, thereby obtaining a synchronised data signal and a synchronised clock phase; wherein the optical receiver further comprises a phase estimation circuitry configured to estimate a phase of a received optical burst signal with respect to the reference clock signal and wherein the optical receiver is further configured to: receive a first optical burst signal; determine a phase estimate correction; receive a second optical burst signal; and obtain a corrected phase estimate; and, synchronise the reference clock signal with the corrected phase estimate as the configurable initial clock phase.

## Description

### Technical Field

Various example embodiments relate to burst-mode receiving in a passive optical network, PON.

### Background

Passive optical networks, PONs, provide telecommunication by use of fibre-optic technology. PONs have a one-to-multiple structure, wherein a central optical line terminal, OLT, services a plurality of optical network units, ONUs. The OLT and ONUs are connected via an optical distribution network, ODN, comprising passive elements, such as fibre-optic cables and passive optical splitters. PONs provide continuous downstream communication, from the OLT to all ONUs, and burst mode upstream communication, from a single ONU to the OLT.

The OLT organises upstream communication such that ONUs can send bursts of information to the OLT. To this end, the OLT may, for example, implement time-division multiplexing, TDM, or time and wavelength-division multiplexing, TWDM. During such burst-mode communication, a single wavelength band is temporarily occupied by one ONU, thereby blocking other communication. Momentarily, all but one ONU are prohibited from communicating with the OLT. When processing bursts received from an ONU, the OLT synchronises to the incoming signal before being able to extract data from the burst. To this end, the OLT may implement clock-and-data recovery, CDR. Because of the critical nature of burst mode communication, communication overhead during burst mode, including synchronisation to an incoming burst as performed by the OLT, has an effect on the overall performance of a PON.

### Summary

According to some aspects, there is provided the subject matter of the independent claims. Some further aspects are defined in the dependent claims.

The embodiments and features described in this specification that do not fall within the scope of the independent claims, if any, are to be interpreted as examples useful for understanding various embodiments.

According to a first example aspect, there is provided an optical receiver, configured to receive optical burst signals in a passive optical network, PON. The optical receiver comprises a clock-and-data-recovery, CDR, circuitry configured to synchronise a reference clock signal with a received optical burst signal starting from a configurable initial clock phase, thereby obtaining a synchronised data signal and a synchronised clock phase. The optical receiver further comprises a phase estimation circuitry configured to estimate a phase of a received optical burst signal with respect to the reference clock signal. The optical receiver is further configured to, during receiving of a first optical burst signal: estimate, by the phase estimation circuitry, at least a first phase estimate, and synchronise, by the CDR circuitry, the reference clock signal with the first optical burst signal, thereby obtaining a first synchronised clock phase. The optical receiver is further configured to determine a phase estimate correction based on a difference between the first synchronised clock phase and the first phase estimate. The optical receiver is further configured to, during receiving of a second optical burst signal: estimate, by the phase estimation circuitry, a second phase estimate; correct the second phase estimate with the phase estimate correction, thereby obtaining a corrected phase estimate; and, by the CDR circuitry, synchronise the reference clock signal with the corrected phase estimate as the configurable initial clock phase.

The optical receiver connects to the optical fibre in a PON and is able to receive optical signals, generated and sent by one or more other devices within the PON. The optical receiver may, for example, be part of an optical line terminal, OLT, an optical network unit, or another component of a PON. In a PON, upstream communication may be organised in burst mode. When using burst transmission, a device, for example an ONU, transmits an optical signal, also referred to as a burst or burst signal, over the PON for receival by a device, for example an OLT, while other devices of the PON refrain from transmitting signals over the PON. As such, a delimited communication channel is established between a single transmitting device and a receiving device or group of receiving devices. It is envisaged that an OLT may send optical signals to a single ONU or to a group of ONUs in burst mode.

Clock-and-data recovery, CDR, refers to techniques for retrieving data in such an optical receiver. CDR entails synchronising to an incoming burst signal to enable extraction of data contained by the burst signal. Since burst signals arrive at the optical receiver at an unknown moment in time, recovering the timing information from the signal, i.e. synchronisation by the CDR circuitry is critical to the performance of data extraction. Optical burst signals are assumed to comprise data symbols at a target symbol frequency that is known to the optical receiver. Small deviations from the target symbol frequency may occur due to non-idealities. The CDR circuitry is configured to synchronise to the incoming data, thereby compensating for these deviations. During the CDR process, a reference clock signal is synchronised to an incoming optical burst signal by aligning a clock edge of the reference clock signal with a data edge of the optical burst signal, wherein the reference clock signal has a frequency approximating the symbol frequency. To this end, the synchronisation process of a CDR comprises a step of phase detection, referring to the detecting of a phase, also referred to as a phase error, of the received optical burst signal as compared to the reference clock signal. After initial synchronisation, the phase error may further change during the reception of the optical signal as a result of various effects, such as jitter and frequency offset. Therefore, the CDR process may be continuously applied during the reception of an optical burst signal to compensate for these changing phase errors.

Due to the critical nature of burst mode communication, extensive overhead caused by performing CDR may be unacceptable for certain applications. Therefore, an initial phase estimation, also referred to as a quick phase search, may be performed, e.g. by a phase estimation circuitry, on an optical burst signal before the actual CDR is initialised. The result thereof, i.e. a phase estimate, may be used for initialising the CDR process in order to speed up convergence or locking of the resulting synchronised clock phase. The phase estimation is thus an operation that is performed relatively faster than a CDR process to obtain a synchronised clock phase. Phase estimation is not essential for processing received optical burst signals and may be selectively applied during certain periods of time, e.g. for accelerating the CDR.

The optical receiver is configured to receive succeeding optical burst signals, e.g. the first optical burst signal and the second optical burst signal. After receiving of a first optical burst signal, a phase estimate correction is determined for correcting a phase estimate of a later optical burst signal. The second optical burst signal may be received immediately after the first optical burst signal, or may be received at a much later time after receiving of the first optical burst signal. The difference for the phase estimate correction is a representation of the discrepancy between the first synchronised clock phase and the first phase estimate. The difference may, for example, be expressed as a mathematical difference. The determining of the phase estimate correction may comprise calculating the phase estimate correction, e.g. by calculating the mathematical difference between the first synchronised clock phase and the first phase estimate.

By providing a phase estimate correction taking into account a divergency between the first synchronised clock phase and the first phase estimate, the correction compensates for a variety of the undesired effects that lead to the undesired phase offset. The term 'phase offset' refers to the discrepancy between the synchronised clock phase and the first phase estimate. The phase offset is thus a measure for the performance of the phase estimation circuitry. For example, when the phase offset is small, the first phase estimate closely approximates the synchronised clock phase and an effective phase estimation was performed resulting in the first phase estimate. By providing the phase estimate correction, a combination of different components contributing to the phase offset are collectively remedied. It mitigates a need for identifying and quantifying the different components individually. Contributions to the undesired phase offset may, for example, be caused by non-idealities of circuitries in the optical receiver. Further, use of a different mechanism for phase detection performed by the CDR circuitry versus phase detection performed by the phase estimation circuitry may also result in an additional phase offset. Compensating for the phase offset may result in a better initial estimate of the phase error of a received optical burst signal with respect to the reference clock signal. An improved initial estimate leads to a reduced CDR overhead. In addition, applying the phase estimate correction may reduce a probability of the CDR ending up in a metastable state, since the phase estimation may provide estimates that are closer to the optimal clock phase and further away from metastable states. Further, the optical receiver according to the first example is advantageously independent of an algorithm selected for the phase estimation as well as of an algorithm selected for the CDR. The optical receiver poses no restrictions on PON technology and is therefore compatible with any TDM and TWDM schemes and may be suited for 50GPON technology.

According to example embodiments, the optical receiver further comprises an equalisation circuitry configured to perform equalisation by applying equalisation coefficients on received optical burst signals.

Equalisation refers to applying filtering for reducing inter-symbol interference, ISI of received optical burst signals. The ISI may, for example, be introduced by dispersion over the optical channel or by bandwidth limitations at a transmitting end or at the optical receiver.

According to example embodiments, during the receiving of the first optical burst signal, the first phase estimate is used for determining the configurable initial clock phase of the CDR for the synchronising.

The first phase estimation, resulting in the first phase estimate, may be performed before the synchronising of the reference clock signal with the first optical burst signal. Then, the first phase estimate can be used as the configurable initial clock phase, for initialising the CDR.

By utilising the result of the first phase estimation for determining the phase estimate correction, which may in any case be used for initialising the CDR, no additional phase estimation needs to be performed on the first optical burst signal. Using the first phase estimate as the configurable initial clock phase may be especially advantageous when the optical channel can be assumed to be stationary. When using the first phase estimate to determine the configurable initial clock phase, the first phase estimation and the CDR are not performed on the same part of the optical signal, since the CDR process happens after the phase estimation. However, an effective phase estimate correction may be achieved with a stationary optical channel, as the optical burst signal may not significantly vary between the first phase estimation and the CDR process.

According to example embodiments, the optical receiver is further configured to, during receiving of the first optical burst signal, estimate, by the phase estimation circuitry, an initial phase estimate; the initial phase estimate is used for determining the configurable initial clock phase of the CDR for the synchronising; and estimating the first phase estimate is performed after starting the synchronising.

The initial phase estimate may be used to initialise CDR of the first optical burst signal, while the first phase estimate may be performed for determining the phase estimate correction.

By determining the phase estimate correction based on the first phase estimate, a useful reference for determining the correction with respect to the first synchronised clock phase is utilised. This may result in a well-performing phase estimate correction. At least due to the varying phase error or a varying symbol pattern of the incoming first optical burst signal, the first optical burst signal may comprise dissimilarities over time. Even when the first optical burst signal comprises a repeating pattern, e.g. a clock signal, small dissimilarities may occur. Therefore, the first phase estimate and the synchronised clock phase may advantageously be compared over the same part of the first optical burst signal. The first phase estimate may then be estimated on the first optical burst signal at a time instance corresponding to obtaining the synchronised clock phase. This would result in an input of the first phase estimation and an input of the CDR, i.e. the input resulting in the synchronised clock phase, being the same. Then, the phase estimation and CDR are applied on the same part of the first optical burst signal, which is advantageous for comparison purposes as for obtaining the phase estimate correction. Additionally, when this exact matching in time does not occur, a valuable phase estimate correction may also be obtained. For example, when the first optical burst signal comprises a repeating pattern, resulting in limited occurring dissimilarities. As another example, a high performance may be achieved without exact matching of the inputs when the channel may assumed to be stationary. Further, by estimating the first phase estimate after starting the synchronising, it is avoided that the first phase estimation is performed on an initial part of the first optical burst signal that is not even used by the CDR circuitry. The similarity, or, the closeness in time between the CDR circuitry outputting the synchronised clock phase and the phase estimation circuitry starting estimating the first phase estimation may be related to the quality of the comparison.

According to further example embodiments, estimating the first phase estimate is performed while performing the synchronising.

By estimating the first phase estimate while performing the synchronising, a reliable reference for determining the correction with respect to the first synchronised clock phase is applied. The proximity in time of inputs taken, by the phase estimation circuitry and CDR circuitry, from the first optical burst signal may result in a smaller difference between said inputs. Therefore, an accurate phase estimate correction may be achieved, even when the channel may be non-stationary.

According to further example embodiments, synchronising, by the CDR circuitry, further comprises pausing the synchronising by the CDR circuitry during estimating of the first phase estimate.

The phase estimation circuitry may not be able to estimate a phase estimate from an incoming optical burst signal during synchronising with that incoming optical burst signal performed by the CDR circuitry. This may, for example, be due to the nature of a phase estimation algorithm applied by the phase estimation circuitry. Additionally, the pausing may enable only requiring a single hardware block for executing both the phase estimation and the CDR process.

Pausing the CDR introduces flexibility in that the optical receiver is not restricted by a choice of phase estimation algorithm. Even phase estimation algorithms requiring pausing of the synchronising may be applied, without compromising the benefits provided by the optical receiver.

According to further example embodiments, synchronising, by the CDR circuitry, further comprises, after the pausing, resuming the synchronising after the estimating of the first phase estimate with a clock phase obtained upon the pausing.

Advantageously, after pausing the synchronising, no new phase estimate correction needs to be taken into account for reinitialising CDR. The CDR circuitry may resume using the previously determined clock phase as the configurable initial clock phase.

According to further example embodiments, the synchronising of the reference clock signal by the CDR circuitry further comprises locking the reference clock signal to the received optical burst signal, thereby establishing the synchronised clock phase and, thereafter, tracking the received optical burst signal, thereby adjusting the synchronised clock phase; and the estimating of the first phase estimate is performed after the locking.

In a CDR process, locking refers to aligning a clock edge of the reference clock signal with the optical burst signal for the first time during receival. For example, clock edges of a sampling clock may be aligned to the centre of an eye diagram corresponding to the optical burst signal. Locking indicates an initial detection of the synchronised clock phase. Tracking refers to the remaining process of synchronising during CDR, occurring after the locking. After locking, the synchronised clock phase may continuously be updated in accordance with the tracking.

By estimating the first phase estimate after the locking, the resulting phase estimate correction may be highly effective. The estimating after the locking may result in a matching of the inputs of the first phase estimation and the CDR. Advantageously, estimating the first phase estimate may be initiated when the synchronised clock phase is established as a result of the locking. In other words, the estimating of the first phase estimate may be performed at a time of locking.

According to further example embodiments, estimating the first phase estimate is performed after training of the equalisation coefficients and after performing the equalisation.

The process of equalisation may introduce an equalisation-related phase offset contribution. CDR may be performed during or after equalisation, resulting in the synchronised clock phase comprising the equalisation-related phase offset component. The equalisation-related phase offset may, however, not be comprised by the first phase estimate. For example, the estimation resulting in the first phase estimate may be performed before the equalisation. Therefore, by correcting the second phase estimate with the phase estimate correction, the equalisation-related phase offset is advantageously captured in the phase estimate correction and compensated for.

According to example embodiments, the phase estimate correction is further based on phase estimate corrections determined for one or more further previously received optical burst signals.

For example, the phase estimate correction may be an average of previously determined phase estimate corrections or may be an exponential average of previously determined phase estimate corrections.

Determining the phase estimate correction as a function of previously determined phase estimate corrections may further contribute to the robustness of the optical receiver. When applying exponential averaging, the robustness may be even further increased, as more recent calculations receive a higher weight than calculations performed further into the past.

According to example embodiments, received optical burst signals comprise a preamble pattern, a delimiter and payload symbols, and the CDR circuitry and phase estimation circuitry are configured to operate at least on the preamble pattern, wherein the preamble pattern comprises a first pattern and a second pattern, and wherein the CDR circuitry is configured to operate on the first pattern and the phase estimation circuitry is configured to operate on the second pattern.

A preamble may be tailored to enable an efficient CDR and may, for example, comprise a clock-shaped signal pattern. A delimiter may be used to delimit a boundary between the preamble and payload symbols or, in other words, mark an end of the preamble. The delimiter may comprise a predetermined signal pattern that is known to sending and receiving entities of the PON, e.g. the ONUs and OLT. The payload symbols represent the relevant information, or, in other words, the actual message, carried by the optical burst signal that is to be extracted by the optical receiver.

Configuring the phase estimation circuitry to perform phase estimation on the first pattern enables, at a transmitting end, providing of a first pattern that is tailored for an effective and/or efficient phase estimation at the optical receiver. The first pattern may be in accordance with one or more selected algorithms for performing phase estimation in the optical receiver. Analogously, configuring the CDR circuitry to perform CDR on the second pattern enables, at a transmitting end, providing a second pattern that is tailored for an effective and/or efficient CDR at the optical receiver. However, the first pattern and the second pattern may have a different spectral content. These diverse frequency spectra cause the phase estimation and CDR processes to find diverging results. As such, this may result in an additional contribution to the phase offset. The phase estimate correction may advantageously compensate for this phase offset component.

According to example embodiments, estimating the first phase estimate is performed by executing a first estimation algorithm, and estimating the initial phase estimate is performed by executing an initial estimation algorithm, wherein the first estimation algorithm is selected such that a variance error of the first estimation algorithm is smaller than a variance error of the initial estimation algorithm, and wherein the initial estimation algorithm is selected such that an offset error of the initial estimation algorithm is smaller than an offset error of the first estimation algorithm.

There exists a variety of phase estimation algorithms. Some phase estimation algorithms may have a property of resulting in relatively low offset errors, meaning that the average result obtained by performing such an algorithm will be close to the correct clock phase. However, these phase estimation algorithms may result in a high variance on the errors. On the other hand, phase estimation algorithms providing a more accurate phase estimation, resulting in relatively low variance errors, meaning that results obtained by performing such an algorithm are compactly distributed. However, these phase estimation algorithms may result in a higher offset error.

By applying an initial estimation algorithm resulting in a small offset error, the average phase estimate used to initialise the CDR is close to the phase error, thereby providing an optimal initialisation of the CDR on average. By applying a first estimation algorithm resulting in a small error variance, results of the first phase estimation circuitry may lie close together at the expense of a larger error offset. The increased offset error may, however, be advantageously compensated by performing the phase estimation correction. The relatively high offset can be captured by the phase estimate correction. In other words, a larger offset that may result from the first estimation algorithm could advantageously be cancelled by performing the phase estimate correction.

According to a second example aspect, there is provided an optical line terminal, OLT, comprising the optical receiver; wherein the optical receiver is configured to receive optical burst signals from a plurality of optical network units, ONUs.

According to further example embodiments, the optical receiver is further configured to perform the determining of the phase estimate correction and the correcting of the second phase estimate based on optical burst signals obtained from a same ONU.

An optical channel via the PON between the OLT and a single ONU may, during normal circumstances, remain the same optical channel over the operation time of the PON, or may very slowly change over the lifetime of the PON. Therefore, the OLT may advantageously determine and apply phase estimate corrections for each ONU separately. The OLT may already comprise memory allocated for each ONU, for example for storing equalisation coefficients. This memory may be advantageously used or extended for storing phase estimate corrections and other parameters related thereto. Further, the phase estimate correction may advantageously be further based on phase estimate corrections determined for one or more previously received optical burst signals from the same ONU.

According to a third example aspect, there is provided an optical network unit, ONU, comprising the optical receiver; wherein the optical receiver is configured to receive optical burst signals from an OLT.

According to a fourth example aspect, there is provided a method for receiving optical burst signals, by an optical receiver, in a passive optical network, PON. The method comprises a step of, during receiving of a first optical burst signal: estimating, by a phase estimation circuitry, at least a first phase estimate; and synchronising, by a CDR circuitry, a reference clock signal with the first optical burst signal, thereby obtaining a first synchronised clock phase. The method further comprises a step of determining a phase estimate correction based on a difference between the first synchronised clock phase and the first phase estimate. The method further comprises a step of, during receiving of a second optical burst signal: estimating, by the phase estimation circuitry, a second phase estimate; correcting the second phase estimate with the phase estimate correction, thereby obtaining a corrected phase estimate; and, by the CDR circuitry, synchronising the reference clock signal with the corrected phase estimate as the configurable initial clock phase.

The method according to the fourth example aspect may be performed by the optical receiver according to the first example aspect and may provide the thereby corresponding benefits.

### Brief Description of the Drawings

Fig. 1 shows a schematic view of a PON including an OLT configured to receive optical burst signals in a passive optical network.
Fig. 2 shows a schematic diagram of a reference clock and an optical burst signal.
Fig. 3 shows a schematic diagram of obtaining and applying a corrected phase estimate, wherein a first phase estimation occurs during CDR.
Fig. 4 shows a schematic diagram of obtaining and applying a corrected phase estimate, wherein a first phase estimation occurs before CDR.
Fig. 5 shows a schematic diagram of obtaining and applying a corrected phase estimate, including an initial phase estimation.
Fig. 6 shows a schematic diagram of obtaining and applying a corrected phase estimate, wherein CDR is paused during a first phase estimation.
Fig. 7 shows a schematic diagram of obtaining and applying a corrected phase estimate, wherein CDR is performed on a first pattern and phase estimation is performed on a second pattern.

### Detailed Description of Embodiment(s)

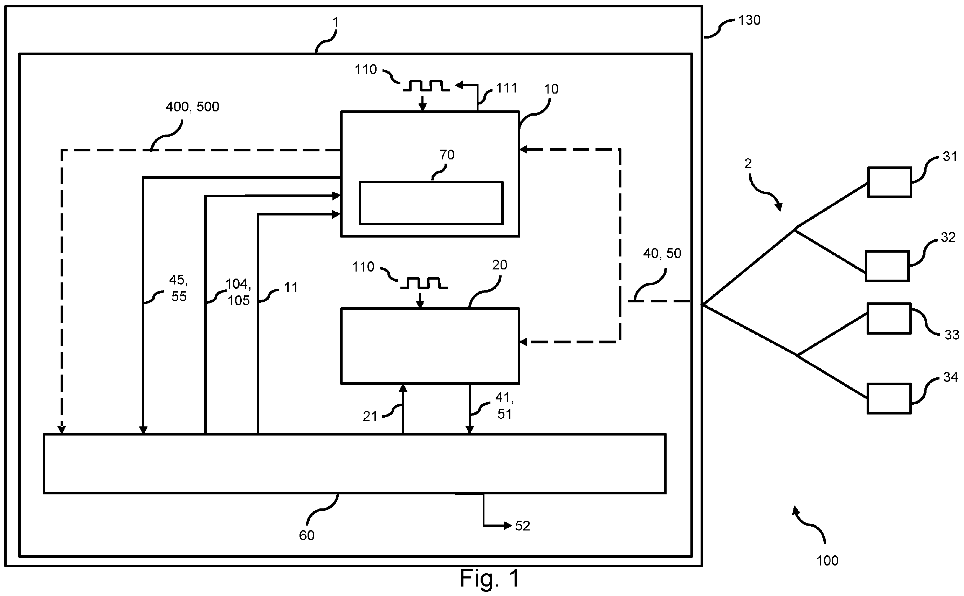

Figure 1 schematically illustrates a passive optical network, PON, 100 comprising an optical line terminal, OLT, 130, an optical distribution network, ODN, 2, and optical network units, ONUs, 31, 32, 33, 34 according to example embodiments. During continuous downstream communication, the OLT 130 communicates an optical signal stream to the ONUs 31, 32, 33, 34 via the ODN 2. During upstream burst communication, ONUs 31, 32, 33, 34 may transmit optical burst signals, or, in other words, optical signal bursts to the OLT 130 over the ODN 2. Optical burst signals may arrive at the OLT 130 at any moment in time during burst mode. The OLT 130 is thus not able to anticipate beforehand to received optical burst signals and needs to perform timing recovery during receival of optical burst signals. Optical burst signals may have a structure and/or properties as defined by a burst mode protocol or standard, e.g. the International Telecommunication Union Telecommunication Standardization Sector, ITU-T, standard G.984 for implementing a giga-bit capable passive optical network, G-PON. The upstream communication is regulated by the OLT 130 in order to avoid collisions of ONU messages. The OLT may, for example, reserve time slots for each of the ONUs 31, 32, 33, 34 to send upstream burst signals over the ODN 2. Both the OLT 130 and the ONUs 31, 32, 33, 34 have an optical receiver, configured to receive optical burst signals, and an optical transmitter to transmit optical signals. Figure 1 shows two optical burst signals 40, 50 transmitted by an ONU and received by the OLT 130. For example, optical burst signals 40, 50 may have been transmitted by ONU 31. In Figure 1, only the optical receiver 1 of the OLT 130 is shown. The optical receiver 1 shown in Figure 1 may be identical to the optical receivers of the ONUs 31, 32, 33, 34. Alternatively, the OLT 130 may comprise the optical receiver 1 and ONUs 31, 32, 33, 34 may comprise different optical receivers.

The optical receiver 1 comprises a clock-and-data-recovery, CDR, circuitry 10 and a phase estimation circuitry 20. The CDR circuitry 10 recovers timing information from incoming optical burst signals 40, 50. This timing information allows for recovery of the data in the optical burst signals. To this end, the CDR circuitry 10 synchronises 111 a reference clock signal 110 with the optical burst signal 40, 50. The CDR circuitry 10 is initialised by a configurable initial clock phase 104, 105 that serves as a starting point for the CDR process. The configurable initial clock phase 104, 105 is an estimate of the phase error of the incoming optical burst signal 40, 50. The configurable initial clock phase 104, 105 may be set to a predetermined value. The reference clock signal 110 may be an internal clock signal generated by a clock circuitry. The reference clock signal 110 may, for example, be used to generate a sampling clock signal for sampling of a received optical burst signal 40, 50. A phase error may be present between the generated sampling clock signal and a received signal 40, 50, resulting in sampling the signal 40, 50 at non-optimal positions. To this end, the reference clock signal 110 may be adjusted 111 by a configurable phase by the CDR circuitry upon receiving a signal 40, 50. The CDR circuitry will adjust this configurable phase until the phase error is compensated for. By the compensation, the sampling clock will sample the data signal 40, 50 near the optimal sampling positions. In Figure 1, the CDR circuitry determines the synchronised clock phase 45, i.e. the timing error between the reference clock signal 110 and the optical burst signal 40, 50. The CDR circuitry attempts to correct the phase error.

Incoming optical burst signals 40, 50 are constructed at a transmitting end may comprise periodicity or timing inaccuracies, e.g. caused by frequency wandering or jitter. In addition, the optical channel, i.e. the ODN 2, may also introduce undesired alterations to optical signals. Therefore, adjustment of the initial synchronisation is required after the locking by the CDR circuitry in order to remain synchronised with the optical burst signal 40. This adjustment may be performed by further adjusting the synchronised clock phase 45. The further adjustment is also referred to as tracking.

Analogously to the optical burst signal 40, a second optical burst signal 50 received at a later time instance is processed by the CDR circuitry 10 starting from a configurable initial clock phase 105 and resulting in a synchronised clock phase 55. The synchronised data signals 400, 500 recovered from the optical burst signals 40, 50 are also shown in Figure 1. In Figure 1, the flow of received data signals within the optical receiver 1 is indicated by dashed lines. The synchronised data signals 400, 500 may be forwarded to computational blocks outside of the optical receiver 1 for further processing. Optionally, the forwarding may be performed via a controller 60 as illustrated in Figure 1.

The optical receiver 1 further comprises a phase estimation circuitry 20 configured to perform a quick phase error estimation, for example on incoming optical burst signal 50. The phase estimation circuitry 20 aims at obtaining a rough estimate 51 of the phase error, also referred to as phase estimate 51. The rough estimate 51 determined by the phase estimation circuitry 20 is defined relative to the reference clock signal 110. The configurable initial clock phase of the CDR circuitry 10 may be initialised with the phase estimate 51 obtained by the phase estimation circuitry 20. In addition, such phase estimates can be improved or corrected by using a phase estimate 41 that was determined for a previously received optical burst signal 40. For a previous optical signal 40, it can be determined how far off the rough estimate 41 was from the synchronised clock phase 45 obtained by the CDR circuitry 10, i.e. the phase offset can be determined. The clock phase 45 found by the CDR circuitry 10 can as such be used as a ground truth value of the phase error for optical signal 40. It can be assumed that for the next optical signal 50, the deviation of the phase estimate from the synchronised clock phase 55, i.e. the phase offset, might be similar. It is therefore useful to compensate for the deviation of the rough estimate 41 found by the phase estimation circuitry 20 during a previous optical signal 40, when configuring the initial clock phase 105 for the next optical signal 50. The compensating is done by applying a phase estimate correction 52 to optical burst signal 50.

Optical receiver 1 further comprises a controller 60 configured to communicate with the CDR circuitry 10 and the phase estimation circuitry 20. The controller is configured to receive synchronised clock phases 45, 55 from the CDR circuitry 10. The controller may also receive the recovered data signals 400, 500 from the CDR circuitry 10. The controller may be configured to provide the recovered data signals 400, 500 externally, e.g. outside of the OLT 130 comprising the optical receiver 1. The controller is further configured to receive phase estimates 41, 51 from the phase estimation circuitry 20. From these inputs, the controller can determine the phase estimate correction 52. The controller can apply the correction 52 by providing the corrected phase estimate to the CDR circuitry as the configurable initial clock phase 105. Further, the controller may be configured to send a CDR control signal 11 to the CDR circuitry 10, thereby initialising the CDR process. Optionally, the initial clock phase 104, 105 may be embedded in the control signal 11.. The controller may be further configured to send a phase estimation control signal 21 to the phase estimation circuitry 20, e.g. to command the circuitry 20 to perform a phase estimation.

Further, the CDR circuitry 10 may optionally comprise an equalisation circuitry 70. In this case, equalisation may be interwoven with the CDR process. Alternatively, an equalisation circuitry 70 may be provided separate from the CDR circuitry 10. The equalisation circuitry 70 determines and applies equalisation coefficients, e.g. corresponding to a finite impulse response, FIR, filter or corresponding to an infinite impulse response, IIR, filter. The equalisation coefficients may be trained, by the equalisation circuitry 70, based on incoming optical burst signals 40, 50, i.e. during or after receiving of optical burst signals 40, 50. Training of the equalisation coefficients may be performed at the beginning of receiving of an optical burst signal. Alternatively, equalisation coefficients can be predetermined, e.g. loaded from a memory.

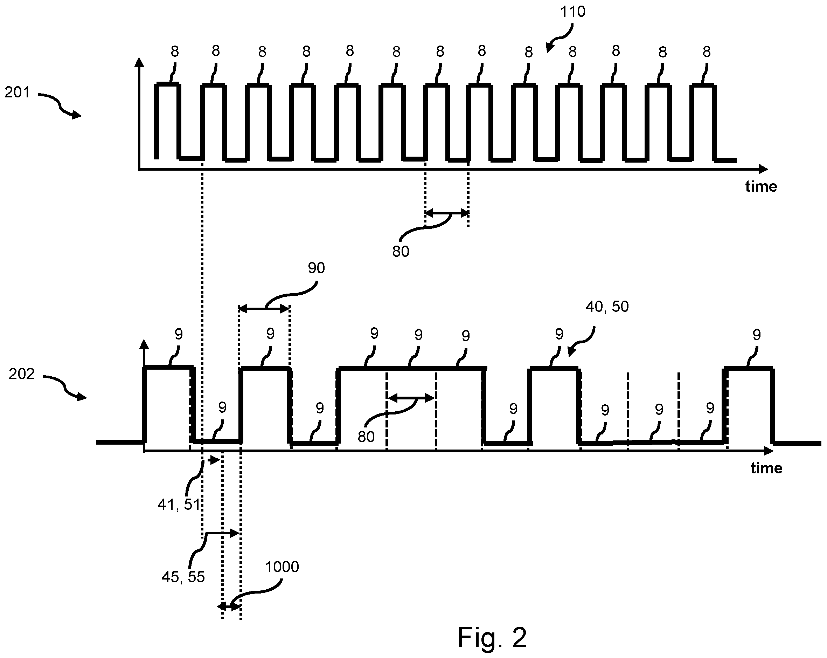

Figure 2 illustrates reference clock signal 110 when it is misaligned, or, in other words, out of phase, with incoming optical burst signal 40, 50. Subplot 201 shows the reference signal having pulses 8 at a certain clock period 80. Subplot 202 shows an optical burst signal 40, 50 having non-return to zero symbols 9 and having a certain symbol period or unit interval length 90. A phase estimate 41, 51 is determined by the phase estimation circuitry 20 with respect to an edge of the reference clock signal 110. As can be seen in Figure 2, the phase estimate 41, 51 may not be completely accurate. In the example of Figure 2, the estimated phase 41, 51 is too small. A synchronised clock phase 45, 55 is determined by the CDR circuitry 10, also with respect to an edge of the reference clock signal 110. The synchronised clock phase 45, 55 correctly locates a periodicity within the optical signal 40, 50, and in this example occurs at a data edge of the optical signal 40, 50. The first and second phase estimates 41, 51 and the first and second synchronised clock phases 45, 55 may be expressed in seconds, e.g. nanoseconds, or in radians or degrees, representing an angle within a period 80 of the reference clock signal 110. The phase estimates 41, 51 and the synchronised clock phases 45, 55 may be represented in a digital format. The resulting mathematical difference 1000 is also indicated in Figure 2.

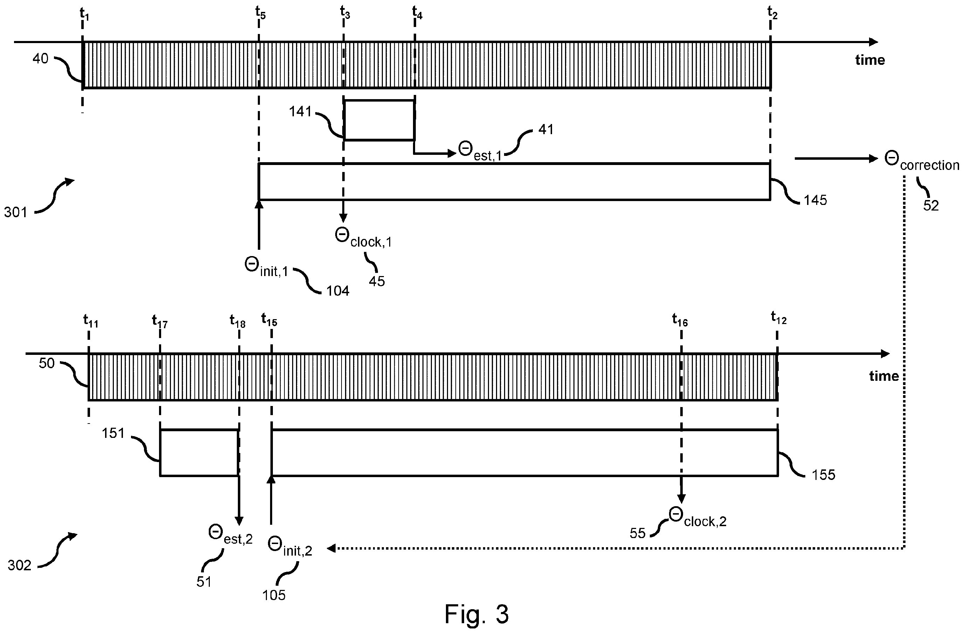

Figure 3 illustrates an example embodiment of the correction of the phase estimate by compensating for a phase offset determined based on a previously received optical burst signal 40. This compensation may, for example, be done by the controller 60 upon receiving signals 40, 50. Subplot 301 shows the operations that are performed by the optical receiver during receiving of a first optical burst signal 40 over time. Subplot 302 shows the operations that are performed by the optical receiver during receiving of a later, second optical burst signal 50.

Referring to subplot 301, the receiving of the first optical burst signal 40 is indicated by block 40 having a pattern fill of vertical stripes. The receiving begins at a time t₁ and ends at a time t₂, i.e. at time t₂ the entire optical burst signal 40 has been received. At some time t₅ ≥ t₁ the CDR circuitry starts performing CDR 145. CDR may continue until the entire optical signal 40 has been received at t₂. CDR may be initialised with a configurable initial clock phase 104, θ_{init,1}, that may be provided by the phase estimation circuitry. The CDR circuitry may lock to a synchronised clock phase 45, θ_{clock,1}, at time t₃. At some time during CDR, e.g. at t₃, the phase estimation circuitry starts performing a phase estimation 141 on the part of the first optical signal 40 that appears at that time during the receiving. It is noted that alternatively, the phase estimation circuitry may start performing the phase estimation 141 before or after t₃. This results in the first phase estimate 41, θ_{est,1}, that becomes available at a later time t₄, after performing necessary calculations. The phase estimation is ideally performed during or after the locking of the CDR at time t₃, since the clock phase 45 outputted by the CDR circuitry may be assumed to compensate the real phase error of optical signal 40 from that moment on. Optionally, the phase estimation may be performed at a later time, e.g. after receiving the entire optical burst signal 40. From the clock phase 45, θ_{clock,1}, and the phase estimate 41, θ_{est,1}, a distinction is then extracted by the controller 60, resulting in an approximation of the phase offset. The phase estimate correction 52, θ_{correction}, attempts to compensate for the phase offset and may thus be the opposite of the extracted distinction. The phase estimate correction is based on a difference between the clock phase 45, θ_{clock,1}, and the phase estimate 41, θ_{est,1}, wherein the difference may be a mathematical difference. The phase estimate correction may then be equal to the difference, yet with an opposite sign. The difference may also be referred to as a discrepancy, distinction or the phase offset between the synchronised clock phase 45, θ_{clock,1}, and the first phase estimate 41, θ_{est,1}. In some cases, the phase estimation circuitry may output the phase estimate having a wrong sign, e.g. -90 degrees or 270 degrees instead of 90 degrees. Upon detecting this, later optical burst signals may efficiently be corrected by inverting the result of the phase estimation circuitry instead of correcting with a phase estimate correction of 180 degrees.

Similarly to subplot 301, the pattern fill of vertical stripes in subplot 302 again illustrates the receiving of a second optical burst signal 50. The receiving begins at a time t₁₁ and ends at a time t₁₂, i.e. at time t₁₂ the entire optical burst signal 50 has been received. At some time t₁₅ ≥ t₁₁ the CDR circuitry starts performing CDR 155. CDR may continue until the entire optical signal 50 has been received at t₁₂. A phase estimation 151 is here performed by the phase estimation circuitry before CDR, resulting in the second phase estimate 51, θ_{est,2}. The second phase estimation 151 starts at a time t₁₇ and ends at a time t₁₈. CDR is here initialised with a configurable initial clock phase 105, θ_{init,2}, that comprises the phase estimate 51, θ_{est,2}, yet with the phase estimate correction, θ_{correction}, applied to it. For example, the configurable initial clock phase 105, θ_{init,2}, may equal the second phase estimate 51, θ_{est,2}, plus the phase estimate correction, θ_{correction}. The configurable initial clock phase 105, θ_{init,2}, may equal the second phase estimate 51, θ_{est,2}, minus the phase offset. The resulting initial clock phase 105, θ_{init,2}, is now liberated from the phase offset based on the previously received optical signal 40. After locking of the CDR process, a synchronised clock phase 55, θ_{clock,2}, is available. The controller 60 may inspect the synchronised clock phase 55, θ_{clock,2}, for example after time t₁₆.

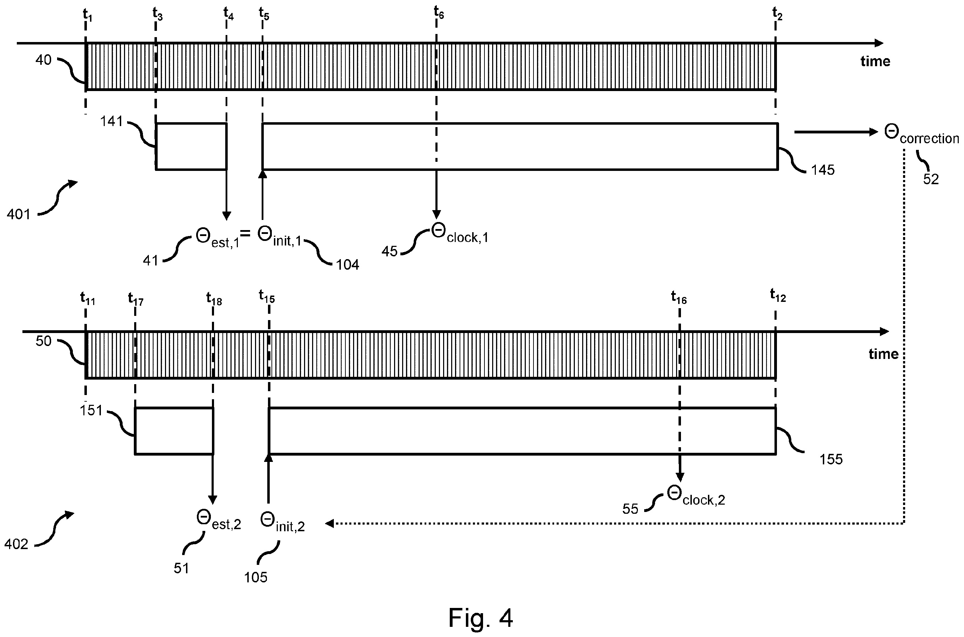

Figure 4 illustrates the phase estimate correction according to example embodiments, wherein the first phase estimate 41, θ_{est,1}, used for determining the phase estimate correction, θ_{correction}, may be applied before performing of the CDR. The phase estimate correction may, for example, be performed by the controller 60 upon receiving signals 40, 50. In this case, the first phase estimate 41, θ_{est,1}, can advantageously also be used for initialising the CDR, i.e. as the configurable initial clock phase 104, θ_{init,1}. For a sufficiently stationary optical channel, the phase estimate correction, θ_{correction}, may as such compensate for a significant portion of the phase offset, resulting in a quicker CDR convergence performed on the second optical burst signal 50. Subplot 401 illustrates the processing of a first optical burst signal 40. The same reference numerals and symbols are used as in subplot 301 of Figure 3 to denote the same functional components. The CDR process may lock at a time herewith denoted as t₆. Subplot 402 illustrates the processing of a second optical burst signal 50. The same reference numerals and symbols are used as in subplot 302 of Figure 3 to denote the same functional components.

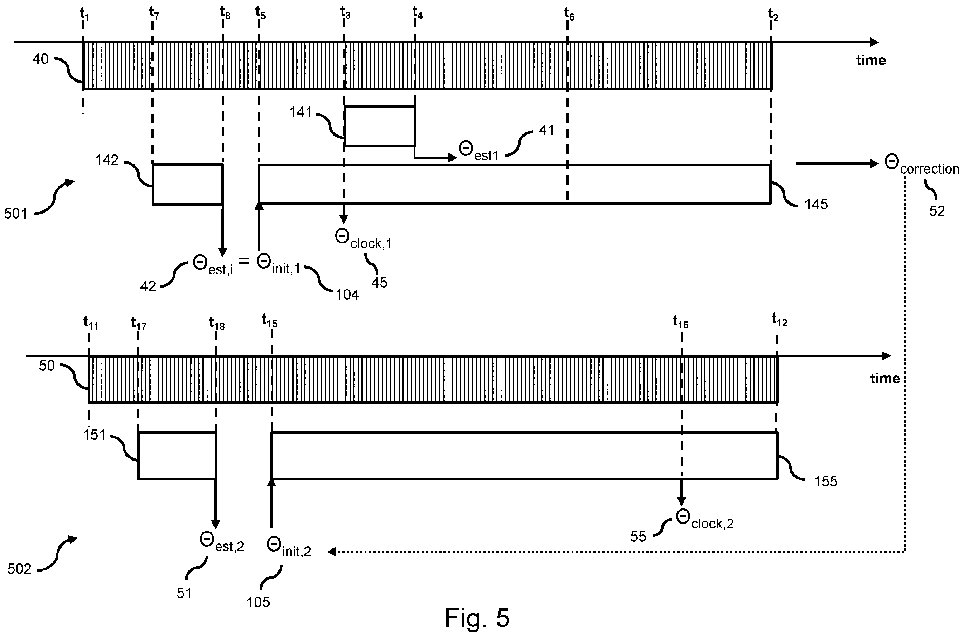

Figure 5, illustrates an example embodiment wherein the phase estimation circuitry may be used twice during receival of an optical burst signal 40. As an example, the phase estimate correction may here again be performed by the controller 60 upon receiving signals 40, 50. Referring to subplot 501, the phase estimation circuitry may first perform an initial phase estimation 142, resulting in an initial phase estimate 42, θ_{est,i}. The estimate 42, θ_{est,i} is used for initialising the CDR process, i.e. θ_{est,i} equals the configurable initial clock phase 104, θ_{init,1}. Determining the initial phase estimate 42, θₑₛt_{,i}, takes place from t₇ to t₈. Next, the phase estimation circuitry may, during CDR, perform the first phase estimation for determining the phase estimate correction, θ_{correction}. Further, the same reference numerals and symbols are used as in subplot 301 of Figure 3 to denote the same functional components. Subplot 502 illustrates the processing of a second optical burst signal 50. The same reference numerals and symbols are used as in subplot 302 of Figure 3 to denote the same functional components.

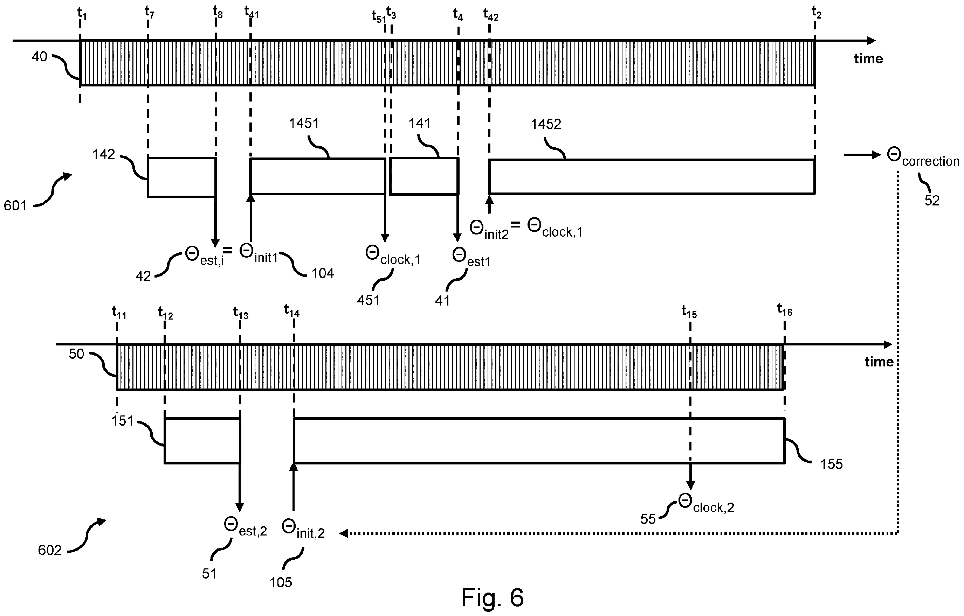

Figure 6 illustrates an example embodiment wherein the CDR process may be interrupted during determining of the phase estimate 41, θ_{est,1}, for deriving the phase estimate correction, θ_{correction}. As an example, the phase estimate correction may here again be performed by the controller 60 upon receiving signals 40, 50. An initial phase estimation 142 may take place starting at t₇ and ending at t₈. Next, at t₄₁, a first CDR processing stage 1451 is performed by the CDR circuitry. Then, at t₅₁, the CDR process is temporarily stopped, whereafter the first phase estimation 141 is performed from t₃ to t₄. After the first phase estimation 141 has been completed, the CDR process is resumed at t₄₂, resulting in a second processing stage 1452. The second processing stage 1452 can now be initialised using the synchronised clock phase 451, θ_{clock,1}, recovered at the end of the first processing stage as the configurable initial clock phase θ_{init,2}. A synchronised clock phase recovered during the second CDR stage, may be used for the phase estimate correction of the second phase estimation 151. Further, the same reference numerals and symbols are used as in subplot 301 of Figure 3 to denote the same functional components. Subplot 602 illustrates the processing of a second optical burst signal 50. The same reference numerals and symbols are used as in subplot 302 of Figure 3 to denote the same functional components.

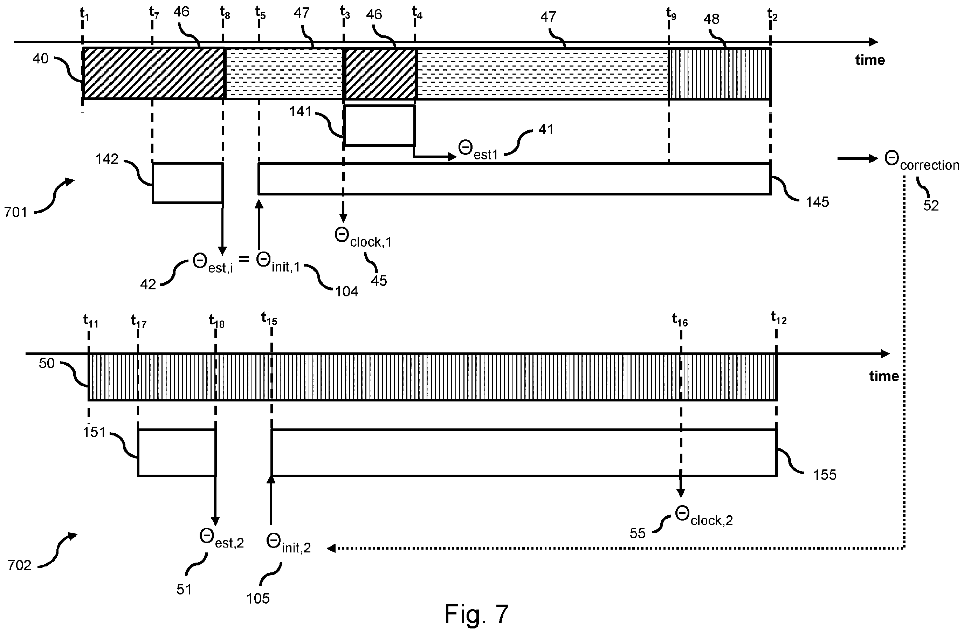

Figure 7 illustrates the exploitation of varying patterns within incoming optical burst signals by the CDR circuitry and the phase estimation circuitry of the optical receiver according to example embodiments. An optical burst signal may comprise a preamble pattern in the beginning of the signal, followed by payload symbols. The preamble may comprise a clock signal, tailored for an efficient CDR process. The payload symbols comprise the actual information to be extracted by the optical receiver. The preamble and the payload may be separated by a delimiter, which is a short, predetermined pattern that enables recognising the end of the preamble and the beginning of the payload symbols. Additionally, subsequent preamble portions, separated by a delimiter may be provided, e.g. in 50GPON technology. The phase estimation circuitry may be more efficient or performant when executed on specific preamble patterns. To this end, optical signals may be constructed at a transmitting end to comprise a preamble with a first pattern, e.g. a clock signal-like pattern, and a second pattern, adapted for an easier phase estimation. The CDR circuitry synchronisation is configured to initially operate on the first pattern in order to lock and the phase estimation circuitry is configured to operate on the second pattern. In subplot 701 of Figure 7, the first pattern 47 is shown having a pattern fill of alternating horizontal stripes. The second pattern 46 is shown having a pattern fill of diagonal stripes. The payload portion 48 of the first optical burst signal 40 is represented by having a pattern fill of vertical stripes. At a time t₉, the preamble ends and the payload symbols start. For example, a delimiter may be received at t₉. It is noted that the payload is shown here only as a small portion of the optical signal 40 for illustrative purposes. However, the preamble portion may be much shorter in comparison to the payload length. Further, the same reference numerals and symbols are used as in subplot 501 of Figure 5 to denote the same functional components. Subplot 702 illustrates the processing of a second optical burst signal 50. The same reference numerals and symbols are used as in subplot 302 of Figure 3 to denote the same functional components.

It is noted that the first phase estimation 141 may be performed on the preamble pattern, but may also be performed on a delimiter or on the payload symbols of the incoming optical signal 40. In addition, the initial phase estimation 142 and the first phase estimation 141 may be performed on different patterns within the optical signal 40.

When the optical receiver 1 is implemented in an OLT 130, phase estimate corrections can be stored separately per ONU. Depending on which ONU the OLT 130 may receive a burst signal from, the optical receiver 1 may implement the phase estimate correction corresponding to that ONU. Alternatively, ONUs may be grouped, e.g. based on a similar distance to the OLT 130. Alternatively, a single phase estimate correction is applied for all the ONUs 31, 32, 33, 34 in the PON 100. Further, the phase estimate correction may be updated during every receival of a burst, or, the phase estimate correction may be updated regularly or sporadically. When the optical receiver 1 is part of an OLT 130, the phase estimate correction 52 may be initialised in various manners before the first burst of an ONU is received. This might, for example, be the case when a new ONU joins the PON 100. The initialisation may be to a predetermined value, for example based on phase estimate corrections 52 related to other ONUs in the PON 100. The first time when a phase estimate correction is determined for a certain ONU, it is preferred to determine the correction on a burst having an increased preamble length. This may be advantageous due to an expected increased CDR settling time in such a case. The OLT 130 has control over the preamble length. For example, the OLT 130 imposes a longer preamble length during bursts for serial number acquisition during ONU discovery, or during ranging burst or selected burst having a longer preamble for equalisation purposes. The latter may also be referred to as training bursts. These burst may be exploited to determine a valuable initialisation of the phase estimate correction 52.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An optical receiver (1), configured to receive optical burst signals (40, 50) in a passive optical network, PON; wherein the optical receiver (1) comprises a clock-and-data-recovery, CDR, circuitry (10) configured to synchronise (111) a reference clock signal (110) with a received optical burst signal (40, 50) starting from a configurable initial clock phase (104, 105), thereby obtaining (145, 155) a synchronised data signal and a synchronised clock phase (45, 55); wherein the optical receiver (1) further comprises a phase estimation circuitry (20) configured to estimate (141, 151) a phase (41, 51) of a received optical burst signal (40, 50) with respect to the reference clock signal (110); and wherein the optical receiver (1) is further configured to:
- during receiving of a first optical burst signal (40): estimate (141), by the phase estimation circuitry (20), at least a first phase estimate (41), and synchronise (111), by the CDR circuitry (10), the reference clock signal (110) with the first optical burst signal, thereby obtaining a first synchronised clock phase (45);
- determine a phase estimate correction (52) based on a difference (1000) between the first synchronised clock phase (45) and the first phase estimate (41); and
- during receiving of a second optical burst signal (50): estimate (151), by the phase estimation circuitry (20), a second phase estimate (51); correct the second phase estimate (51) with the phase estimate correction (52), thereby obtaining a corrected phase estimate; and, by the CDR circuitry (10), synchronise (111) the reference clock signal (110) with the corrected phase estimate as the configurable initial clock phase (105).

2. The optical receiver according to claim 1, further comprising an equalisation circuitry (70) configured to perform equalisation by applying equalisation coefficients on received optical burst signals (40, 50).

3. The optical receiver according to claim 1 or 2, wherein, during the receiving of the first optical burst signal (40), the first phase estimate (41) is used for determining the configurable initial clock phase (104) of the CDR for the synchronising.

4. The optical receiver according to claim 1 or 2, further configured to, during receiving of the first optical burst signal (40), estimate (142), by the phase estimation circuitry (20), an initial phase estimate (42); and wherein the initial phase estimate (42) is used for determining the configurable initial clock phase (104) of the CDR for the synchronising; and wherein estimating the first phase estimate (41) is performed after starting the synchronising.

5. The optical receiver according to claim 4, wherein estimating the first phase estimate is performed while performing the synchronising.

6. The optical receiver according to claim 4, wherein synchronising, by the CDR circuitry, further comprises pausing the synchronising by the CDR circuitry during estimating of the first phase estimate (41).

7. The optical receiver according to claim 6, wherein synchronising, by the CDR circuitry, further comprises, after the pausing, resuming the synchronising after the estimating of the first phase estimate with a clock phase obtained upon the pausing.

8. The optical receiver according to any one of claims 4-7, wherein the synchronising of the reference clock signal by the CDR circuitry further comprises locking the reference clock signal to the received optical burst signal, thereby establishing the synchronised clock phase and, thereafter, tracking the received optical burst signal, thereby adjusting the synchronised clock phase, and wherein the estimating (141) of the first phase estimate (41) is performed after the locking.

9. The optical receiver according to any one of claims 4-8 and claim 2, wherein estimating the first phase estimate (41) is performed after training of the equalisation coefficients and after performing the equalisation.

10. The optical receiver according to any one of the preceding claims, wherein the phase estimate correction is further based on phase estimate corrections determined for one or more further previously received optical burst signals.

11. The optical receiver according to any one of the preceding claims, wherein received optical burst signals (40, 50) comprise a preamble pattern, a delimiter and payload symbols, and wherein the CDR circuitry and phase estimation circuitry are configured to operate at least on the preamble pattern, wherein the preamble pattern comprises a first pattern and a second pattern, and wherein the CDR circuitry is configured to operate on the first pattern and the phase estimation circuitry is configured to operate on the second pattern.

12. The optical receiver according to any one of preceding claims 4-11 as long as depending on claim 4, wherein estimating the first phase estimate is performed by executing a first estimation algorithm, and wherein estimating the initial phase estimate is performed by executing an initial estimation algorithm, wherein the first estimation algorithm is selected such that a variance error of the first estimation algorithm is smaller than a variance error of the initial estimation algorithm, and wherein the initial estimation algorithm is selected such that an offset error of the initial estimation algorithm is smaller than an offset error of the first estimation algorithm.

13. An optical line terminal, OLT, (130) comprising the optical receiver (1) according to any one of the preceding claims; wherein the optical receiver is configured to receive optical burst signals from a plurality of optical network units, ONUs (31, 32, 33, 34).

14. The OLT (130) according to claim 13, wherein the optical receiver (1) is further configured to perform the determining of the phase estimate correction and the correcting of the second phase estimate based on optical burst signals obtained from a same ONU.

15. A method for receiving optical burst signals (40, 50), by an optical receiver, in a passive optical network, PON, the method comprising the steps of:
- during receiving of a first optical burst signal (40):
- estimating (141), by a phase estimation circuitry (20), at least a first phase estimate (41); and
- synchronising (111), by a CDR circuitry (10), a reference clock signal (110) with the first optical burst signal, thereby obtaining a first synchronised clock phase (45);
- determining a phase estimate correction (52) based on a difference (1000) between the first synchronised clock phase (45) and the first phase estimate (41); and
- during receiving of a second optical burst signal (50):
- estimating (151), by the phase estimation circuitry (20), a second phase estimate (51);
- correcting the second phase estimate (51) with the phase estimate correction (52), thereby obtaining a corrected phase estimate; and,
- by the CDR circuitry (10), synchronising (111) the reference clock signal (110) with the corrected phase estimate as the configurable initial clock phase (105).
